# EUROPEAN PATENT APPLICATION

(11) **EP 1 634 933 A1**
(43) Date of publication of application: **15.03.2006**
(21) Application number: 05251824.8
(22) Date of filing: 23.03.2005
(51) Int. Cl.: C09D 183/04, C09K 3/00, C08K 5/00

(54) **Coating composition for protectiing automobile surfaces and coating method**

(30) Priority: 08.09.2004 JP 2004260774
(71) Applicant: Rock Field Company, Osaka-shi, Osaka (JP)
(72) Inventor: Shizuo, Shitaoka, Rock Field Company, Osaka-shi Osaka (JP); Goro, Nishikawa, Rock Field Company, Osaka-shi Osaka (JP); Takashi, Nakatsuru, Rock Field Company, Osaka-shi Osaka (JP)
(74) Representative: White, Duncan Rohan

(57) **Abstract**

A coating material for protecting a coated film of an automobile comprises: at least an organosilioxane oligomer; a catalyst; a silane compound; and a titanium compound, wherein the coating material has a viscosity of 50 mPa•s or less at 25°C.

A coating method comprises: coating the coating material for protecting the coated film of an automobile without any discontinuity on an coating zone of an automobile body using a coating tool, and wiping the applied coating material until the film thickness is reduced to 5 µm or less without generating coating irregularity using a wiping tool; recoating the same coating material on the same coating zone in the same manner, and wiping the recoated coating material until the film thickness is reduced to 5 µm or less without generating coating irregularity using the wiping tool; and drying the coating zone by air drying or forced drying.

## Description

### BACKGROUND OF THE INVENTION

### Field of the Invention

The present invention relates to a coating material for protecting a coated film of an automobile and a coating method, more particularly a one-component coating material for protecting a coated film of an automobile which can comparatively easily obtain a durable coating layer generating no interference fringes and preventing the attachment of fingerprints without using a solvent, and a coating method thereof.

### Description of the Related Art

Automobiles are expensive commodities. Many purchasers service a mechanical part such as an engine periodically so as to maintain the commercial value, and wash and coat wax the coated part of an automobile body periodically. Although waxing is excellent in initial water repellency and glossiness, a drawback exists in that the waxing requires a finishing process such as wiping off due to manual work for sufficiently demonstrating the effects and the effects are reduced in about three months. Another drawback exists in that wax components eluted and adhered to a glass surface deteriorate the field of view of a driver.

So as to solve the drawbacks, a method for providing a coating layer made of a silicone resin or a polymer on the coated part of the automobile body has been proposed. For example, a method for forming a coating layer made of a silicon resin on the automobile body has been proposed, wherein a two-component mixed coating material containing an organic solvent and silicon resin is coated on the automobile body and is wiped off, and the other two-component mixed coating material having different components is coated and wiped off (see Japanese Published Unexamined Patent Application No. 2000-325874).

However, the above method has the following problems. First, a problem exists in that the use of two kinds of two-component mixed coating materials requires time and labor in mixing work, and different compositions for every step are not suitable to continuous works. A problem exists in that since the mixed coating material contains an organic solvent, the viscosity and resin concentration of the coating material are changed with a change in time, and the applicability of the coating material and the thickness of the coating are changed. Further, although the above method discloses that the coating material is coated in one direction (see claim 1), a problem exists in that when the wetting between the mixed coating material and a substrate is deteriorated, the mixed coating material is repelled and/or is peeled off after coating. In addition, after the coating layer formed by the above method is dried, fingerprints may be attached on the coating layer, and interference fringes may be generated.

It is an object of the present invention to provide a one-component coating material for protecting a coated film of an automobile which can comparatively easily obtain a durable coating layer generating no interference fringes and preventing the attachment of fingerprints without using a solvent. It is an another object of the present invention to provide a coating method of the coating material.

### SUMMARY OF THE INVENTION

A coating material for protecting a coated film of an automobile of the present invention, comprises:
at least an organosiloxane oligomer; a catalyst; a silane compound; and a titanium compound, wherein the coating material has a viscosity of 50 mPa•s or less at 25°C. A coating method of the present invention, comprises: a once coating step of coating the coating material for protecting the coated film of the automobile without any discontinuity in a coating zone of an automobile body using a coating tool, and wiping the applied coating material for protecting the coated film of the automobile until the film thickness is reduced to 5 µm or less without generating coating irregularity using a wiping tool; a recoating step of recoating the coating material for protecting the coated film of the automobile on the same coating zone as that of the once coating step using the coating tool, and wiping the recoated coating material for protecting the coated film of the automobile until the film thickness is reduced to 5 µm or less without generating coating irregularity using the wiping tool; and a drying step of drying the coating zone by air drying or forced drying.

A durable coating layer generating no interference fringes and preventing the attachment of fingerprints without using a solvent can be comparatively easily obtained by the present invention.

### DETAILED DESCRIPTION OF THE PREFERRED EMBODIMENTS

The coating material for protecting the coated film of the automobile of the present invention, comprises: (a) an organosiloxane oligomer; (b) a catalyst; (c) a silane compound; and (d) a titanium compound, wherein (e) the coating material has a viscosity of 50 mPa•s or less at 25°C. First, the components of the coating material for protecting the coated film of the automobile will be described in detail.

### (a) Organosiloxane oligomer

The organosiloxane oligomer (a) is an organosiloxane oligomer and its derivatives represented by the following formula (1),

R¹₃SiO (R¹₂SiO)₁SiR¹₃ (1)

wherein R¹ is a hydrogen atom, a hydroxyl group, a halogen atom and a monovalent organic group having 1 to 8 carbon atoms, and R¹s may be identical or different from each other, 1 is a number of 1 to 40. Examples of the derivatives include a hydrolyzate of the organosiloxane oligomer and a condensate of the organosiloxane oligomer. The organosiloxane oligomers (a) may individually be used or a mixture of two or more kinds thereof may be used.

Examples of the halogen atoms constituting R¹ include fluoride and chlorine.

Examples of the organic groups constituting R¹ and having 1 to 8 carbon atoms include: an alkyl group such as a methyl group, an ethyl group and a propyl group; an alkoxyl group such as a methoxy group and an ethoxy group; and a phenyl group.

A part of R¹ may be substituted with a substituent such as the halogen atom, an amino group, an epoxy group, a carboxyl group, the hydroxyl group, a methacryl group, a mercapto group, the phenyl group and a vinyl group, and further a part of the these substituents may be substituted with the above substituent.

Of these, the organosiloxane oligomer (a) which contains a structure in which a silicon atom is bound to a hydrolyzable group and/or the hydroxyl group, for example, a condensate of an alkoxy silane or the condensate of a chloro silane are preferable. The organosiloxane oligomer (a) is cocondensed with the silane compound (c) and the titanium compound (d) to be immobilized at the time of curing the coating material for protecting the coated film of the automobile according to the present invention. Therefore, a stable coating layer can be obtained.

The above compound may be prepared and used as the organosiloxane oligomer (a), or a commercially available organosiloxane oligomer may be used. Examples of the commercially available organosiloxane oligomers include KC 89S and KR400 manufactured by Shin-Etsu Chemical Co., Ltd., and XC96-B0446 and XR31-B2230 manufactured by GE Toshiba Silicone Co., Ltd. These organosiloxane oligomers may be used as they are, and the organosiloxane oligomers hydrolyzed may be used.

Since the organosiloxane oligomer (a) is a base resin, the quantity thereof is set to 100 parts by weight and is taken as a comparison reference.

### (b) Catalyst

Examples of the catalysts (b) include an acid compound, an alkaline compound, a salt compound, an amine compound, an organic metallic compound and/or its partial hydrolyzate (hereinafter, the organic metallic compound and/or its partial hydrolyzate are collectively referred to as "organic metallic compounds") . The catalysts (b) may individually be used or a mixture of two or more kinds thereof may be used.

Examples of the acid compounds include acetic acid, hydrochloric acid, sulfuric acid and phosphoric acid.

Examples of the alkaline compounds include sodium hydrate and potassium hydrate.

Examples of the salt compounds include an alkali metal salt such as naphthenic acid and octyl acid.

Examples of the amine compounds include aminosilane, ethylenediamine, hexamethylene diamine, diethylenetriamine, triethylenetetramine, alkylamine salts and quaternary ammonium salts. There can be also mentioned various modified amines capable of being used as a curing agent for epoxy resins.

Examples of the organic metallic compounds include: an organic zirconium compound such as di-n-butoxy bis(ethylacetoacetate)zirconium and n-butoxy tris(ethylacetoacetate)zirconium; an organic titanium compound such as di-i-propoxy bis(ethylacetoacetate)titanium and di-i-propoxy bis(acetylacetate)titanium; an organoaluminum compound such as di-i-propoxy acetylacetonato aluminum and i-propoxy bis (ethylacetoacetate) aluminum; and an organic tin compound and its partial hydrolyzate such as (C₄H₉)₂Sn (OCOC₁₁H₂₃)₂, (C₄H₉)₂Sn (SCH₂COOC₈H₁₇)₂ and (C₄H₉)₂Sn (SCH₂CH₂COOC₈H₁₇)₂.

The catalyst (b) may be blended in the step of preparing the coating material for protecting the coated film of the automobile according to the present invention, or may be blended with the coating material for protecting the coated film of the automobile in the step for forming a coating film. Further, the catalyst may be blended in the step of preparing the coating material for protecting the coated film of the automobile and the step of forming the coating film.

The above compounds may be prepared and used for the catalyst (b), or commercially available catalysts may be used. Examples of the commercially available catalysts include D-20 manufactured by Shin-Etsu Chemical Co., Ltd., as a polymer (partial hydrolyzate) of tetraalkoxy titanium.

The quantity of the catalyst (b) is 0.1 to 40 parts by weight relative to 100 parts by weight of the organosiloxane oligomer (a), more preferably 0.5 to 35 parts by weight, and still more preferably 1 to 30 parts by weight. When the quantity of the catalyst (b) exceeds the upper limit, the storage stability is deteriorated, and the cure rate is remarkably increased. Thereby the coating work of the coating material may become difficult. When the quantity of the catalyst (b) exceeds the lower limit, the cure rate is remarkably decreased, and the recoating time and the hardening/curing time become long. In extreme cases, poor curing may not cause the original hardness development.

### (c) Silane compound

The silane compound (c) is a silane compound and its derivatives represented by the following formula (2),

r²ₘSi³₄₋ₘ (2)

wherein R² represents a hydrogen atom or a monovalent organic group having 1 to 8 carbon atoms, R³ represents a halogen atom, a hydroxyl group or a monovalent alkoxyl group having 1 to 8 carbon atoms, R²s and R³s may be identical or different to each other when a plurality of R²s and R³s are present, and m is an integer of 0 to 3. Examples of the derivatives include the hydrolyzate of the silane compound and the condensate of the silane compound. The silane compounds (c) may individually be used or a mixture of two or more kinds thereof may be used.

Examples of the organic groups constituting R² and having 1 to 8 carbon atoms include an alkyl group such as a methyl group, an ethyl group and a propyl group; a vinyl group; and a phenyl group.

A part of R² may be substituted with a substituent such as a vinyl group, an epoxy group, a styryl group, a methacryloxy group, an acryloxy group, an amino group, a ureido group, a halogen atom, a mercapto group, a sulfide group, an isocyanate group and a carboxyl group.

Examples of the halogen atoms constituting R³ include fluoride and chlorine. Examples of the monovalent alkoxyl groups constituting R³ and having 1 to 8 carbon atoms include a methoxy group, an ethoxy group, n-propoxy group and i-propoxy group.

Specific examples of the silane compounds (c) include:
tetraalkoxysilanes such as tetramethoxysilane;
trialkoxysilanes such as methyltrimethoxysilane;
dialkoxysilanes such as dimethyldimethoxysilane;
monoalkoxysilanes such as trimethylmethoxysilane; and
chlorosilanes such as trichlorosilane.

Of these, the trialkoxysilanes and the trichlorosilanes are preferable. In particular, a silane coupling agent having both a reactive group chemically bonding with an organic substance and another reactive group chemically bonding with an inorganic substance is preferable. The reason is that the silane coupling agent promotes curing and gives the effect of improvement in crosslinking properties and adhesion properties.

Specific examples of the silane coupling agents include vinyltrichlorosilane, 3-glycidoxypropyltrimethoxysilane,
3-glycidoxypropyltriethoxysilane,
3-methacryloxypropyltriethoxysilane,
3-acryloxypropyltrimethoxysilane,
3-aminopropyltrimethoxysilane and p-styryltrimethoxysilane.

The above compounds may be prepared and used for the silane compound (c), or a commercially available silane compound may be used. Examples of the commercially available silane compounds include KBM-403 manufactured by Shin-Etsu Chemical Co., Ltd. The silane compounds may be used as they are, or silane compounds hydrolyzed may be used.

In the present invention, the quantity of the silane compound (c) is 0.1 to 20 parts by weight relative to 100 parts by weight of the organosiloxane oligomer (a), more preferably 0.5 to 15 parts by weight, and still more preferably 1.5 to 10 parts by weight. When the quantity of the silane compound (c) exceeds the upper limit, cracking and surface bleed out may be generated. When the quantity of the silane compound (c) exceeds the lower limit, there is a possibility that the improvement in adhesion and crosslinking failure may be a cause.

### (d): Titanium compound

The titanium compound (d) is a titanium alcoholate and its derivatives represented by the following formula (3), and a titanium acylate and its derivatives represented by the following formula (3),

R⁴ₙTi(OR⁵)₄₋ₙ (3)

wherein R⁴ represents an organic group having 1 to 8 carbon atoms, a plurality of R⁴s may be identical or different from each other when the plurality of R⁴s are present, R⁵ represents an organic group selected from the group consisting of an alkyl group having 1 to 6 carbon atoms, an acyl group having 1 to 6 carbon atoms and phenyl group, a plurality of R⁵s may be identical or different from each other when the plurality of R⁵s are present, and n is an integer of 0 to 3. The titanium compounds may individually be used or a mixture of two or more kinds thereof may be used.

Examples of the titanium alcoholate and titanium acylate derivatives include the hydrolyzate and condensate thereof, the chelate compounds thereof, and the hydrolyzate and condensate of the chelate compounds.

In the above formula (3), R⁴ is an organic group having 1 to 8 carbon atoms, and specific examples include an alkyl group such as a methyl group, an ethyl group, an n-propyl group, and an i-propyl group, and an acyl group such as an acetyl group and a propionyl group.

A part of R⁴ may be substituted with, for example, the halogen atom, the amino group and the hydroxyl group, and a part of the above substituents may be further substituted with the above substituent.

Specific examples of the titanium alcoholates include tetra-i-propoxytitanium, tetra-n-butoxytitanium, tetra-t-butoxytitanium, di-i-propoxy bis (ethylacetoacetate) titanium, di-i-propoxy bis(acetylacetate)titanium,
di-i-propoxy bis(lactate)titanium,
di-i-propoxy bis(acetylacetonato)titanium,
di-n-butoxy bis(triethanolaminate)titanium,
di-n-butoxy bis(acetylacetonato)titanium and
tetrakis(2- ethylhexyloxy)titanium. Of these, di-i-propoxy bis(acetylacetonato)titanium is preferable.

Specific examples of the titanium acylates and chelate compounds of the titanium acylates include dihydroxy titaniumdibutyrate, di-i-propoxy titaniumdiacetate,
bis(acetylacetonato)titaniumdiacetate,
bis(acetylacetonato)titanium dipropionate, di-i-propoxy titaniumdipropionate, di-i-propoxy titanium dimaloniate, di-i-propoxy titanium dibenzoilate, di-n-butoxy zirconiumdiacetate and di-i-propyl aluminummonomaloniate. Of these, dihydroxy titanium dibutyrate and di-i-propoxy titaniumdiacetate are preferable.

The chelate compound of the titanium alcoholate and the titanium acylate is obtained by reacting a chelating agent such as β-diketones and β-ketoesters with them. The hydrolyzate and condensate of the titanium acylate and the titanium alcoholate, or the hydrolyzate and condensate of the chelate compound thereof is obtained by adding water to the titanium alcoholate and the titanium acylate, or the chelate compound thereof.

The above compounds may be prepared and used for the titanium compound (d), or commercially available titanium compounds may be used. Examples of the commercially available condensates of the titanium alcoholate include T-50 manufactured by Nippon Soda Co., Ltd.

The quantity of the titanium compound (d) capable of being used for the present invention is 0.1 to 50 parts by weight relative to 100 parts by weight of the organosiloxane oligomer (a), more preferably 1 to 40 parts by weight, and still more preferably 2 to 30 parts by weight. When the quantity of the titanium compound (d) exceeds the upper limit, the transparency may be reduced. When the quantity of the titanium compound (d) exceeds the lower limit, a performance for preventing the attachment of fingerprints, a water repellent function and finger touch slip may be reduced.

### (e) Viscosity

The viscosity of the coating material for protecting the coated film of the automobile of the present invention is 50 mPa•s or less at 25°C, and more preferably within the range of 1 to 50 mPa•s. The reason is that the excessively high viscosity causes inferior flow property and large resistance, and it is difficult to coat and spread the coating material of a prescribed amount or less on the automobile body. Here, the viscosity is a value measured by a measuring device used for a usual viscosity measurement such as a rotary viscosity meter.

Since the coating material for protecting the coated film of the automobile of the present invention has a low viscosity and is a one-component, the coating material can be mixed with an injection agent, for example, liquefied petroleum gas (LPG), dimethyl ether (DME), chlorofluorocarbons, nitrogen gas and carbon dioxide or the like, and the mixture can be enclosed in a spray can to be used as aerosol.

Next, the coating method using the above coating material will be described. First, the coating method is divided into three steps of (a) a once coating step, (b) a recoating step and (c) a drying step. Here, the steps will be detailed below.

In the explanation to be described hereinafter, the range of the automobile body processed by one coating work is referred to as a "coating zone." Specific examples of the coating zones include (1) a top (the inside of a drain of a roof), (2) from a top mall (the outside of the drain of the roof) to a rear fender, (3) a trunk (a rear door in a wagon type), (4) a bonnet, (5) a rear door, (6) a front door (a sideview mirror), (7) a fender, (8) a rear bumper, (9) a front bumper, (10) a rear wheel, and (11) a front wheel, (12) a rear license plate, (13) a front license plate, (14) a window washer nozzle, (15) a rubber and plastic parts, (16) a muffler and (17) a back chassis part.

### (a) Once coating step

First, the coating material of a proper quantity is vertically and horizontally spread on a predetermined coating zone of the automobile body without generating coating irregularity by the coating tool. The coating material is then wiped until the film thickness is reduced to 5 µm or less without generating coating irregularity using the wiping tool within 10 minutes after coating the coating material on the coating zone. The coating material is preferably coated so that the effective coating quantity of the coating zone is 5 g/m² or less in view of economic efficiency, the prevention of coating irregularity, the time shortening until the next step due to an early drying and the suppression of cracking. The step of coating and spreading is preferably completed within 30 minutes since the curing advances gradually with elapsed time and the next wiping work becomes difficult.

Herein, the coating tool means a cotton cloth having a thickness of 1 to 5 mm, a so-called ultrafine fiber, for example, an ultrafine cloth or the like made of an ultrafine polyester fiber. The wiping tool means a heavy cotton cloth or the like. The effective coating quantity means the quantity of the coating material left after wiping, and can be calculated by dividing the amount used of the applied coating material by the area of the coating zone.

### (b) Recoating step

After completing the once coating step, the coating material of a proper quantity is coated on the coating zone using the recoating tool by the same method as that of the once coating step, and the coating material is wiped using the wiping tool by the same method as that of the once coating step. When the interference fringes are left at this time, the coating and wiping are repeated until the interference fringes disappear.

The coating material is preferably recoated so that the effective coating quantity of the coating zone is 5 g/m² or less for the prevention of the interference fringes, the promotion of drying and the securement of uniform film thickness. When the recoating step is performed after leaving the coating material for 10 to 120 minutes after completing the once coating step, silanol reaction is advanced, and it is preferable that a coating film is rigidly integrated.

### (c) Drying step

After the recoating step is completed for all the coating zones to be formed, the coating zones are left as they are, and dried by air drying or forced drying. In the case of air drying, for example, the coating zones are left for 1 to 2 hours or more, preferably for 3 hours or more indoors with which the air is directly not brought into contact and at which ventilation equipment is provided. In the case of the forced drying, after the coating zones are dried by air drying for 15 minutes or more, preferably for about 30 to about 60 minutes, the coating zones are dried for 5 to 60 minutes, preferably for about 15 minutes so that the atmosphere temperature in a drier is set to 50°C to 150°C, preferably 60°C to 70°C using a hot wind type drier, an infrared long wave drier, an infrared medium wave drier and an infrared short wave (far-infrared ray) drier or the like.

Thus, a durable coating layer generating no interference fringes and preventing the attachment of fingerprints without using a solvent can be comparatively easily obtained by using the coating material for protecting the coated film of the automobile and coating method of the present invention. Since this coating layer exists, it is unnecessary to coat wax whenever the automobile is washed.

Although the present invention will be detailed below according to Examples, the present invention is not limited thereto. The values of the viscosity in the Examples were measured at 25°C.

### Example 1

### (Preparation of samples)

KC89S (manufactured by Shin-Etsu Chemical Co., Ltd., viscosity: 2 mPa•s) of 100g wherein the substituent is the methyl group and wherein the hydrolyzable alkoxy group is the methoxy group, epoxysilane KBM-403 (manufactured by Shin-Etsu Chemical Co., Ltd.) of 0.5g, di-i-propoxy bis(acetylacetonato)titanium T-50 (manufactured by Nippon Soda Co., Ltd.) of 5g, and a titanium catalyst D-20 (manufactured by Shin-Etsu Chemical Co. , Ltd.) of 3g were stirred by a magnetic stirrer until the mixture becomes uniform, thereby obtaining a coating material (Sample 1) for protecting a coated film of an automobile having a viscosity of 5 mPa•s.

A coating material (Sample 2) for protecting a coated film of an automobile having a viscosity of 75 mPa•s was obtained by the same composition and procedure as that of the Sample 1, except that methyl methyl type KR500 was used as the organosiloxane oligomer.

A coating material (Sample 3) for protecting a coated film of an automobile having a viscosity of 4 mPa•s was obtained by the same composition and procedure as that of the Sample 1, except that di-i-propoxy bis (acetylacetonato) titanium was not added.

### Example 2

### (Initial performance test)

The coating material for protecting the coated film of the automobile of the Sample 1 of about 5g was soaked in a cotton cloth which had a thickness of 5 mm and a length of 30 cm and was vertically and horizontally folded up sequentially from the center thereof. The coating material was vertically and horizontally coated on a standard coating plate for automobiles without generating coating irregularity. The heavy cotton cloth having a thickness of 5 mm was pressed by the flat of a hand and the coating material was promptly wiped off by the heavy cotton cloth of the automobile body before the coating material was dried, specifically, within about 10 minutes after the completion of the coating. The coating material was coated on the standard coating plate for automobiles for a number of times of coating of once, twice and third times. The coating plates of three colors of white, moss green metallic and black were used. When the coating material was recoated twice and third times, after one time or the two time coating was completed, the coating material was recoated by the same method as the once method after 60 minutes respectively.

After the coating samples prepared in this manner were cured at about 25°C for 7 days, the presence or absence of the generation of interference fringes, the water repellency, the recoating adhesion properties and the coating film thickness were investigated. The results are shown in the following Table 1. The presence or absence of the generation of the interference fringes was visually evaluated, and the water repellency was evaluated based on the water contact angle measured by a contact angle measuring instrument (CA-Z) manufactured by Kyowa Interface Science Co., Ltd. The recoating adhesion properties were evaluated according to JIS K5600 5-6 cross cut test. The volume of the coating material was calculated from the weight and density of the applied coating material, and the coating film thickness was calculated by considering the loss in quantity of the volume after the reaction as 20%.

### [Table 1]

Table 1 shows that the interference fringes are hardly generated as the coating material of the Sample 1 is recoated, and the coating film thickness also becomes thin. Also, the coating material of the Sample 1 obtained by coating only once shows sufficiently high water repellency and high recoating adhesion properties.

### Example 3

### (Durability performance test)

The Sample 1 was coated twice on half of a body of a Corolla Fielder (color navy blue metallic) as a new automobile manufactured by Toyota Motor Corporation by the same method as that of Example 2. The automobile was washed at a car wash every month. The dirt removal properties before car washing (dry wiping), generation of flaws due to automobile washing, and pollution removal properties due to car washing of the coated part were compared with those of the non-coated part. The following Table 2 shows the results.

Herein, referring to the dirt removal properties (dry wiping) before automobile washing, the automobile was dry-wiped by using a cotton cloth before automobile washing, and the removal state was visually evaluated. Referring to the presence or absence of the generation of car washing flaws and the pollution removal properties, the pollution removal state after car washing was visually evaluated. An initial car washing was performed on the seventh day after coating the Sample 1. Referring to symbols listed in the column of dirt removal properties (dry wiping) before car washing and the column of pollution removal properties, "A" means that it is considerably easy to remove dirt, and "B" means that it is easy to remove dirt. "C" means that it is difficult to remove dirt, and "D" means that it is considerably difficult to remove dirt. Referring to symbols listed in the column of the presence or absence of the generation of car washing flaws, "A" means that no flaws were generated, and "B" means that minute flaws were generated. "C" means that small flaws were generated, and "D" means that conspicuous flaws were generated.

### [Table 2]

As shown in Table 2, the coated part excels in dirt removal properties (dry wiping) before car washing, the hard generation of car washing flaws, and dirt removal properties due to car washing as compared with the non-coated part, and these excellent characteristics were maintained over a long period of about 1 year.

### Example 4

### (Comparative performance test)

The Sample 1, the Sample 2 and the Sample 3 were coated twice on the white standard coating plate for automobiles by the same method as that of Example 2, and the presence or absence of the generation of interference fringes, the surface smoothness and the coating film thickness were investigated. Table 3 shows the results. As shown in the Table 3, the interference fringes were not generated in Sample 1, and a coating layer with a thin film thickness was able to be formed. The presence or absence of the generation of interference fringes, and the coated film thickness were evaluated by the same method as that of Example 2. Referring to the surface smoothness, the presence or absence of coating irregularity and reflective irregularity were visually evaluated.

### [Table 3]

A: No coating irregularity, no reflective irregularity
D: Coating irregularity, reflective irregularity

### Example 5

### (Comparative durability test)

The Sample 1, the Sample 2 and the Sample 3 were coated on the white standard coating plate for automobiles twice by the same method as that of Example 2. The change in water repellency (water contact angle), color difference, fingerprint attachability and dirt of the samples was investigated while exposing the samples to outdoors over a long period. Table 4 shows the results.

Herein, the water repellency (water contact angle) was measured by the same method as that of Example 2. The color difference ΔL is the difference in the brightness values before exposure and after exposure measured using a color difference meter CR-300 manufactured by Minolta Co., Ltd. Referring to fingerprint attachability, the flat of a hand was pressed on the standard coating plate, and the attachment of fingerprints was visually evaluated. Referring to symbols in Table 4, "A" means that the attachment of fingerprints is almost not recognized, and "B" means that fingerprints are easily wiped off although the fingerprints slightly adhere. "C" means that fingerprints are easily wiped off although the attachment of fingerprints is recognized, and "D" means that fingerprints attached on the whole surface and it is difficult to wipe off fingerprints. Further, referring to the dirt (visual observation), the dirt adhesion of the surface was visually evaluated. Referring to symbols in Table 4, "A" means that the adhesion of smoke is not recognized, and "B" means that smoke can be easily wiped off by the dry cotton cloth although smoke are thinly adhered. "C" means that smoke can be wiped off by the dry cotton cloth though the smokes are adhered, and "D" means that the adhesion of the smokes is considerable and difficult to wipe off by the dry cotton cloth.

### [Table 4]

As shown in Table 4, the water repellency of the standard coating plate was maintained over a long period of 36 months by coating the Sample 1, the Sample 2 and the Sample 3. Each performance of color difference, fingerprint attachability and dirt (visual observation) was hardly deteriorated in the case where the Sample 1 was coated as compared with the case where the Sample 2 or 3 is coated. Especially, fingerprint attachability was not deteriorated from the exposure start to 36 months later.

### Example 6

### (Test for determining component quantity)

In order to investigate the influence of the rate of the organosiloxane oligomer (KC89S described in Example 1), the catalyst (a mixture X40-2309A of a phosphoric acid and organosiloxane manufactured by Shin-Etsu Chemical Co., Ltd., and D-20 described in Example 1), the silane compound (KBM-403 described in Example 1), and the titanium compound (T-50 described in Example 1) constituting the coating material to the characteristics of the coating material, Samples 4 to 15 in which the amounts of the components were different were prepared in the same manner as that of Example 1, and the drying time by finger touch, curability, pencil hardness, fingerprint attachability, adhesion properties and recoating properties were examined. The following items (1) to (3) show the results.

Herein, each of above tests was performed as follows in a room of 25°C using the standard coating plate for the coated film of the automobile on which each Sample was coated twice so that the effective coating quantity was set to 5g/m². First, referring to the drying time by finger touch, the time until fingerprints were not attached to the coating plate was measured. Referring to the curability, after carbon was adhered to the coating film after leaving for 2 hours after coating, the coating material was wiped off by a wet cotton cloth and the coating plate was evaluated. Referring to symbols in the Table, "B" means complete removal, and "C" means thin survival. "D" means incapable of removal. The pencil hardness was evaluated according to JIS K5600 5-4 scratch hardness (pencil method) after 24 hours and after seven days. Fingerprint attachability was evaluated by the presence or absence of the attachment of fingerprints obtained by pressing fingers for 3 seconds. Referring to symbols in the Table, "B" means no attachment of fingerprints, "C" means that fingerprints are easily wiped off, and "D" means that it is difficult to wipe off fingerprints. Adhesion properties were evaluated according to JIS K5600 5-6 cross cut test. Referring to the recoating test, recoating and wiping off are performed after 15 minutes from the completion of once coating. The workability of coating and wiping, and transparency and smoothness of the coating film were observed, and were sensuously and visually evaluated. Referring to symbols in Table, that the coating film once coated and the coating film recoated satisfy the above standard means "B" of ease, "C" of little difficulty and "D" of incapability.

### (1) Influence of the amount of catalysts

As shown in Table 5, the quantity of the catalysts added to the coating material was changed. When the quantity of the catalyst was small (Sample 4), the curing took much time and the hardness of the coating layer was low. To the contrary, when the quantity of the catalyst was large (Sample 7), the coating material was difficult to recoat. In the range of 0.5 to 30 parts by weight of the quantity of the catalyst relative to 100 parts by weight of the organosiloxane oligomer, favorable characteristics were displayed.

### [Table 5]

### (2) Influence of amount of silicon compound

As shown in Table 6, when the quantity of the silicon compound was small (Sample 8), the adhesion properties of the coating layer were deteriorated, and the coating layer was easily peeled from the automobile body. To the contrary, when the quantity of the silicon compound was large (Sample 11), the curing took much time, and the hardness of the coating layer was low. In the range of 0.1 to 20 parts by weight of the quantity of the silicon compound relative to 100 parts by weight of the organosiloxane oligomer, favorable characteristics were displayed.

### [Table 6]

### (3) Influence of titanium compound

Table 7 shows that fingerprints were easily attached on the coating layer when the quantity of the titanium compound was small (Sample 12). To the contrary, the coating material was difficult to recoat when the quantity of the titanium compound was large (Sample 15). In the range of 0.1 to 50 parts by weight of the quantity of the titanium compound relative to 100 parts by weight of the organosiloxane oligomer, favorable characteristics were displayed.

**[Table 1]**

| Color, Number of times of coating | Presence or absence of generation of interference fringes | Water repellency (water contact angle) | Recoating adhesion properties | Coating film thickness (µm) |
|---|---|---|---|---|
| White, Once | Presence | 102° | 100/100 | 0.3 |
| White, twice | Absence | 104° | 100/100 | 0.1 |
| White, 3 times | Absence | 102° | 100/100 | 0.1 |
| Moss green metallic, Once | Presence | 102° | 100/100 | 0.4 |
| Moss green metallic, twice | Presence | 105° | 100/100 | 0.2 |
| Moss green metallic,3 times | Absence | 103° | 100/100 | 0.1 |
| Black, Once | Presence | 102° | 100/100 | 0.3 |
| Black, twice | partial generation | 103° | 100/100 | 0.1 |
| Black, 3 times | Absence | 103° | 100/100 | 0.1 |

**[Table 2]**

| Number of times of car washing, Presence or absence of coating | Dirt removal properties before properties before car washing (dry wiping) | Presence or absence of generation of car washing flaw/pollution removal properties due to automobile washing |
|---|---|---|
| 1, Non-coated | B | B/A |
| 1, Coated | A | A/A |
| 3, Non-coated | B | B/B |
| 3, Coated | A | A/A |
| 5, Non-coated | C | C/C |
| 5, Coated | A | A/A |
| 7, Non-coated | C | C/C |
| 7, Coated | A | A/A |
| 9, Non-coated | D | D/D |
| 9, Coated | A | A/A |
| 11, Non-coated | D | D/D |
| 11, Coated | A | A/A |
| 12, Non-coated | D | D/D |
| 12, Coated | A | A/D |

**[Table 3]**

| Sample name | Presence or absence of generation of interference fringes | Surface Surface smoothness | Coated film Coated film thickness (µm) |
|---|---|---|---|
| Sample 1 | Absence | A | 0.3 |
| Sample 2 | Presence | D | 1.1 |
| Sample 3 | Absence | A | 0.3 |

**[Table 4]**

| Sample name | Exposure period period | Water repellency (water contact angle) | Color difference ΔL | Fingerprints attachability attachability | Dirt (visual observation) observation) |
|---|---|---|---|---|---|
| Non-coating | Immediately after exposure start | 85 | - | D | - |
| | 6 months | 80 | 10 | D | D |
| | 12 months | 74 | 15 | D | D |
| | 24 months | 71 | 17 | D | D |
| | 36 months | 68 | 20 | incapable of judgment | D |
| Sample 1 | Immediately after exposure start | 103 | - | A | - |
| | 6 months | 105 | 0.8 | A | A |
| | 12 months | 102 | 1.1 | A | A |
| | 24 months | 105 | 1.2 | A | A |
| | 36 months | 103 | 1.1 | A | A |
| Sample 2 | Immediately after exposure start | 100 | - | C | - |
| | 6 months | 101 | 1.2 | C | A |
| | 12 months | 102 | 1.4 | C | B |
| | 24 months | 100 | 1.4 | C | B |
| | 36 months | 102 | 2.0 | C | A |
| Sample 3 | Immediately after exposure start | 106 | - | C | - |
| | 6 months | 105 | 1.1 | C | A |
| | 12 months | 104 | 1.5 | C | A |
| | 24 months | 102 | 1.4 | C | B |
| | 36 months | 103 | 1.4 | C | A |

**[Table 5]**

| Using material/ Sample name | Sample 4 | Sample 5 | Sample 6 | Sample 7 |
|---|---|---|---|---|
| KC89S | 100 | 100 | 100 | 100 |
| KBM-403 | 5 | 5 | 5 | 5 |
| T-50 | 5 | 5 | 5 | 5 |
| D-20 | 0 | 0.5 | - | - |
| X40-2309 | - | - | 30 | 35 |
| Drying time by finger touch (minute) | 48 hours | 60 | 35 | 18 |
| Curable | D | B | B | B |
| Pencil hardness (after 24 hours) | Incapable of measurement | F | 2H | 3H |
| Pencil hardness (after seven days) | Incapable of measurement | 3H 3H | 8H 8H | 9H 9H |
| Fingerprint attachability | D | B | B | B |
| Adhesion properties | Incapable of measurement | 100/100 | 100/100 | 100/100 |
| Recoating properties | B | B | B | D |

**[Table 6]**

| Using material/ Sample name | Sample 8 | Sample 9 | Sample 10 | Sample 11 |
|---|---|---|---|---|
| KC89S | 100 | 100 | 100 | 100 |
| KBM-403 | 0 | 0.1 | 20 | 25 |
| T-50 | 5 | 5 | 5 | 5 |
| D-20 | 2 | 2 | 2 | 2 |
| Drying time by finger touch (minute) | 40 | 42 | 48 | 75 |
| Curable | B | B | B | C |
| Pencil hardness (after 24 hours) | H | H | H | F |
| Pencil hardness (after seven days) | 6H | 6H | 4H | 2H |
| Fingerprint attachability | B | B | B | B |
| Adhesion properties | 98/100 | 100/100 | 100/100 | 100/100 |
| Recoating properties | B | B | B | B |

**[Table 7]**

| Using material/ Sample name | Sample 12 | Sample 13 | Sample 14 | Sample 15 |
|---|---|---|---|---|
| KC89S | 100 | 100 | 100 | 100 |
| KBM-403 | 5 | 5 | 5 | 5 |
| T-50 | 0 | 0.1 | 50 | 55 |
| D-20 | 2 | 2 | 2 | 2 |
| Drying time by finger touch (minute) | 45 | 40 | 32 | 28 |
| Curable | B | B | B | B |
| Pencil hardness (after 24 hours) | H | H | 2H | 2H |
| Pencil hardness (after seven days) | 5H | 6H | 8H | 8H |
| Fingerprint attachability | D | C | B | B |

| | | | | |
|---|---|---|---|---|
| Adhesion properties | 100/100 | 100/100 | 100/100 | 100/100 |
| Recoating properties | B | B | B | C |

## Claims

1. A coating material for protecting a coated film of an automobile, comprising: at least an organosiloxane oligomer; a catalyst; a silane compound; and a titanium compound,
wherein the coating material has a viscosity of 50 mPa•s or less at 25°C.

2. The coating material for protecting the coated film of the automobile according to Claim 1, wherein the organosiloxane oligomer has one or more substituents.

3. The coating material for protecting the coated film of the automobile according to Claim 1 or 2, wherein the catalyst is selected from the group consisting of an acid compound, an alkali compound, a salt compound and an organic metallic compound.

4. The coating material for protecting the coated film of the automobile according to any one of Claims 1 to 3, wherein the silane compound contains at least a silane coupling agent.

5. The coating material for protecting the coated film of the automobile according to any one of Claims 1 to 4, wherein the silane compound has a functional group selected from the group consisting of a glycidyl group, an amino group and a vinyl group.

6. The coating material for protecting the coated film of the automobile according to any one of Claims 1 to 5, wherein the titanium compound is di-i-propoxy bis(acetyl acetonato)titanium.

7. A coating method comprising:
a once coating step of coating the coating material for protecting the coated film of the automobile according to any one of Claims 1 to 6 without any discontinuity in a coating zone of an automobile body using a coating tool, and wiping the applied coating material for protecting the coated film of the automobile until the film thickness is reduced to 5 µm or less without generating coating irregularity using a wiping tool;
a recoating step of recoating the coating material for protecting the coated film of the automobile on the same coating zone as that of the once coating step using the coating tool, and wiping the recoated coating material for protecting the coated film of the automobile until the film thickness is reduced to 5 µm or less without generating coating irregularity using the wiping tool; and
a drying step of drying the coating zone by air drying or forced drying.

8. The coating method according to Claim 7, wherein the effective coating quantity of the coating zone is 5 g/cm² or less.

9. The coating method according to Claim 7 or 8, wherein the once coating step is completed within 30 minutes from immediately after the start of coating work, and the recoating step is performed after leaving the coating material for 10 to 120 minutes after completing the once coating step to advance a silanol reaction.

10. The coating method according to any one of Claims 7 to 9, wherein the recoating step is performed twice or more.

11. The coating method according to any one of Claims 7 to 10, wherein the drying step is a step of air drying for 3 hours or more, or a step of forced drying at 50 to 150°C for 5 to 60 minutes after air drying for 30 to 60 minutes.
